# EUROPEAN PATENT SPECIFICATION

(11) **EP 2 816 844 B1**
(45) Date of publication and mention of the grant of the patent: **31.01.2018**
(21) Application number: 13305846.1
(22) Date of filing: 21.06.2013
(51) Int. Cl.: H04W 48/12

(54) **Method and apparatus for providing radio access information**
Verfahren und Vorrichtung zur Bereitstellung von Funkzugangsinformationen
Procédé et appareil permettant de fournir des informations d'accès radio

(43) Date of publication of application: 24.12.2014
(73) Proprietor: ALCATEL LUCENT, 92100 Boulogne-Billancourt (FR)
(72) Inventor: Doll, Mark, 70435 Stuttgart (DE); Stanze, Oliver, 70435 Stuttgart (DE); Doetsch, Uwe, 70435 Stuttgart (DE)
(74) Representative: Menzietti, Domenico

(56) References cited:
- GB-A- 2 492 062
- US-A1- 2009 274 112
- US-A1- 2012 039 284

## Description

### Technical Field

Embodiments generally relate to communication systems and, in particular, to methods and apparatuses for providing a mobile terminal with radio access information.

### Background

After power-on a mobile terminal or User Equipment (UE), as it is called according to 3^{rd} Generation Partnership Project (3GPP) specifications, usually accesses a mobile communication network. For that purpose it needs to perform frequency, time and frame synchronization with the network before it can decode system information messages and select a preferred network, which the mobile terminal may then access via a so-called random access procedure. After having performed said random access to the network the mobile terminal may then perform a Radio Resource Control (RRC) connection setup.

A mobile terminal wishing to access a Long Term Evolution (LTE) system, for example, initially performs a cell search procedure which includes a series of synchronization stages by which the mobile terminal may determine time and frequency parameters that are necessary to demodulate downlink signals, to transmit with correct timing and to acquire some critical system parameters. For cell search, the mobile terminal may use two special signals broadcast on each cell: the Primary Synchronization Signal (PSS) and the Secondary Synchronization Signal (SSS). Detection of these signals allows the mobile terminal to complete time and frequency synchronization and to acquire useful system parameters such as cell identity, cyclic prefix length, and access mode (FDD/TDD). At this stage, the mobile terminal can also decode the Physical Broadcast Control Channel (PBCH) and obtain important system information, such as the Master Information Block (MIB) comprising information on downlink bandwidth, information on the Physical Hybrid Automatic Repeat Request Indicator Channel (PHICH), and information on the System Frame Number (SFN).

After having received the MIB, the mobile terminal can configure the Broadcast Control Channel (BCCH), Downlink Shared Channel (DL-SCH) and map it on the Physical Downlink Shared Channel (PDSCH) to receive System Information Block Type1 (SIB1) that contains the Public Land Mobile Network Identifiers (PLMN-ID) that the cell is part of as well as scheduling information necessary for the mobile terminal to locate System Information Block Type2 (SIB2). SIB2 contains information relevant when evaluating if a mobile terminal is allowed to access a cell as well as Radio Resource Configuration (RRC) information that is common for all UEs.

After SIB2 reception the mobile terminal is able to configure the Random Access Channel (RACH) and common shared channels and may continue with the start up-link synchronization using the aforementioned random access procedure. Initially, the mobile terminal selects one of the available Physical Random Access Channel (PRACH) to transmit a random access preamble, which is chosen randomly out of a range indicated by the network within SIB2. If there is no response from the network, the mobile terminal may re attempt with higher transmission power. A base station or eNodeB (according to 3GPP terminology) may send a random access response on the DL-SCH, using the Random Access Radio Network Temporary Identifier (RA-RNTI), which identifies the PRACH instance that was chosen by the mobile terminal earlier for transmission of the random access preamble. The eNodeB sends timing advance information, UL grant for the mobile terminal on UL-SCH and a temporary Cell Radio Network Temporary Identifier (C-RNTI). The temporary C-RNTI may be used by the mobile terminal for Uplink Shared Channel (UL-SCH) scheduled transmission. The mobile terminal may use the UL grant on UL-SCH to transmit a so-called access stratum message, e.g. a RRC Connection Setup Request, using the temporary C-RNTI provided by the eNodeB. The message contains the Shortened Temporary Mobile Station Identifier (S-TMSI) to uniquely identify the mobile terminal or, in the initial access case, a random number, as an S-TMSI has not yet been assigned by the core network through so-called non-access stratum signaling. The mobile terminal can indicate if it requires more resources in the UL using the MAC (Medium Access Control) Buffer Status Report (BSR). For the purpose of contention resolution, the eNodeB echoes back the RRC Connection Setup Request message on the DL-SCH using the temporary C-RNTI. The single mobile terminal that recognizes its S-TMSI respective random number within the echoed message considers the random access procedure successful and promotes the temporary C-RNTI to its C-RNTI for use in future UL and DL transmissions, while possible other UEs that accidentally used the same random access preamble in the same PRACH instance consider the random access procedure failed and restart it by sending a new random access preamble in one of the upcoming PRACH instances.

For example, US 2012/039284 A1 describes to use so-called unlicensed white space (WS) specific physical (time-frequency) resources for a random access procedure.

A disadvantage of today's radio network access schemes, as the exemplary one described above, is that radio network access is independent on data communication capabilities of the mobile terminal. Thereby the mobile terminal's data communication capabilities may be related to the support of the protocol stack of a specific mobile communications standard or a certain release version thereof. For example, in 3GPP's Long Term Evolution (LTE) Release 8, Cell-Specific Reference Signals (CRS) have been defined to be always present in non Multimedia Broadcast multicast service Single Frequency Network (MBSFN) sub-frames. Although according to LTE Release 10 UEs can solely use Channel-State Information Reference Signal (CSI-RS) and Demodulation Reference Signal (DM-RS) instead for channel estimation and data transmissions, respectively, those LTE Release 8 specific CRS cannot be turned off within the PDSCH to free resources and/or to save power during idle sub-frames, e.g. by completely switching off the transmitter.

For efficiency and complexity reasons it would hence be desirable for radio network access schemes to remove legacy features of a Radio Access Technology (RAT) for which improved replacements exist in a newer release of the RAT. On the other hand, to allow older mobiles to enter the network, legacy features should be retained. This wastes resources and increases complexity.

### Summary

It is one finding of embodiments to encapsulate backward compatibility into a novel primary access channel having a predetermined or preconfigured format or configuration, therewith enabling a variety of different mobile terminals to use said primary access channel as an Initial Access Channel (IAC). The IAC thereby points to a fully configurable secondary access channel allowing the mobile terminal to actually establish a communication link, i.e., a connection, with the mobile communication network. In the configurable secondary access channel all legacy features (i.e. legacy always-on signals) can be turned off and switched on only when required, i.e. when a legacy mobile enters the mobile communication network or the radio access portion thereof via the IAC.

One idea that leads to the concept of the primary and secondary access channel is that no parts of the secondary access channel should be fixed or mandatory, as this allows omitting conventional common / mandatory signaling channels. It also removes the need to inherit legacy features of former releases of a secondary access channel for backward compatibility, as features can be configured on a per mobile basis without impacting other mobiles' radio access configuration. Consequently the present invention provides an apparatus according to the features to claim 1, a method according to the features of claim 14, a user equipment according to the features of claim 15 and a radio access network according to the features of claim 17. According to one aspect the apparatus is operable or configured to provide, via a first access channel having a predetermined (e.g. fixed) format or structure, the mobile terminal with radio access configuration information comprising system information to enable the mobile terminal to access a radio access network via a second access channel which is configurable in accordance with the mobile terminal's data communication capabilities.

Thereby the first and the second access channel comprise logical and/or physical channels conveying information between the (radio) access network and the mobile terminal, wherein the information allows the mobile terminal to enter the network and finally establish a connection with the core network. While the first and the second access channels provide the mobile terminal with configuration information necessary to correctly read downlink signals and to correctly format uplink signals and enable the access network to differentiate the mobile terminal from others, a subsequently established link enables data communication between the mobile terminal and the core network. While the format of the first access channel, which may also be denoted as Initial Access Channel (IAC) is prescribed, i.e. fixed, the format of the second access channel may be completely configurable according to the needs of the mobile terminal. In other words, the apparatus or the radio access network may be operable to provide a first mobile terminal having first data communication capabilities with a second access channel formatted or structured in accordance with the first data communication capabilities and to provide a second mobile terminal having second, different data communication capabilities with a different second access channel formatted or structured in accordance with the second data communication capabilities. However, the apparatus or the radio access network may be operable to provide both the first and the second mobile terminal with a common, e.g. identical, first access channel which is independent from the first and second data communication capabilities.

According to a further aspect, embodiments also provide a method for providing the mobile terminal with radio access information. The method comprises providing, via the first access channel having the predetermined format, the mobile terminal with radio access configuration information comprising system information to enable the mobile terminal to access the radio access network via the second access channel which is configurable in accordance with the mobile terminal's data communication capabilities. To put in again in other words: The radio access network may be operable or configured to provide a first mobile terminal having first data communication capabilities with a second access channel which is formatted or structured in accordance with the first data communication capabilities. On the other hand, the radio access network may be operable or configured to provide a second mobile terminal having second, different data communication capabilities with a different second access channel which is formatted or structured in accordance with the second data communication capabilities. However, the apparatus or the radio access network may be operable to provide both the first and the second mobile terminal with a common, e.g. identical, first access channel which has a format or structure independent from the first and second data communication capabilities.

Some embodiments comprise digital control circuitry installed within the above apparatus for performing embodiments of the method. Such digital control circuitry, e.g. comprising a digital signal processor (DSP), an Application-Specific Integrated Circuit (ASIC), or a general purpose processor, needs to be programmed accordingly. Hence, yet further embodiments also provide a computer program having a program code for performing embodiments of the method, when the computer program is executed on a programmable hardware device, e.g. a computer or a digital processor.

In some embodiments the apparatus and the corresponding method may be related to a network side of a mobile communication network. That is to say, the apparatus may be coupled to a network entity, e.g. a base station or a transmission point being part of a Radio Access Network (RAN) part of the mobile communication network. This RAN may again be coupled to a Core Network (CN) part of the mobile communication network. In such embodiments, the apparatus or network entity may comprise a transceiver module comprising digital and/or analog transmitter and/or receiver circuitry. Such circuitry may comprise digital baseband parts as well as Radio Frequency (RF) parts, for example. In case the apparatus is or is coupled to a network entity, such as a base station, for example, the apparatus may hence be operable to transmit, to the mobile terminal and via the first access channel, the radio access configuration information referring to the fully configurable second access channel.

In other embodiments the apparatus and the corresponding method may be related to the mobile terminal itself. In such embodiments the mobile terminal' module may comprise a transceiver module comprising digital and/or analog transmitter and/or receiver circuitry. Such circuitry may comprise digital baseband parts as well as Radio Frequency (RF) parts, for example. In case the apparatus is or is coupled to the mobile terminal, the apparatus may hence be operable to receive, from the network entity and via the first access channel, the radio access configuration information referring to the fully configurable second access channel. Also, the mobile terminal's apparatus may be operable to access the configurable second access channel of the radio access network according to the mobile terminal's data communication capabilities and based on the radio access configuration information obtained via the predetermined first access channel. That is to say, a mobile terminal may first use the fixed first access channel to obtain information which enables the mobile terminal to access and use the configurable second access channel in a second stage of the network access procedure.

In some embodiments the mobile terminal's data communication capabilities may be conveyed via the first access channel prior to the provision of the radio access configuration information. That is to say, the mobile terminal may be operable to provide a network entity, e.g. a base station or transmission point, with capability information on its data communication capabilities via the first access channel. Likewise, the network entity may be operable to receive said capability information on the first access channel prior to transmitting radio access configuration information to the mobile terminal in response to the capability information.

The capability information may comprise information on one more supported versions of a mobile communication system specification. That is to say, the capability information or the data communication capabilities may indicate the mobile terminal's supported technical features. For example, wireless communication standards may be structured as Releases. The capability information may thus refer to one more supported Release, for example. In the exemplary scenario of 3GPP, the mobile terminal's data communication capabilities may indicate a certain release, for example, 3GPP Release 8, supported by the mobile terminal. In this case the second access channel or its format may be configured according to 3GPP Release 8. If a mobile terminal supports 3GPP Release 10, the associated second access channel or its format may be configured according to 3GPP Release 10. In embodiments each mobile terminal gets associated therewith its own dedicated second access channel.

According to embodiments an access or a usage of the first access channel may be independent on the mobile terminal's supported technical features, i.e. the supported release of the mobile communication system specification. Therefore, embodiments suggest having a fixed setup, structure or format of the first access channel (IAC) which may be common for certain past, present, and future releases of the mobile communication system standard. This allows mobile terminals of any release or standard to access and/or use the first access channel and to establish an initial communication with the wireless network providing the first access channel. According to embodiments the first access channel refers or points to the second access channel which is configurable corresponding or according to the mobile terminal's supported technical features and/or a communication environment, such as urban, rural, high speed, low speed, etc. That is to say, the first access channel may be regarded as a common / broadcast access channel, while the second access channel may be regarded as a mobile terminal specific, i.e. dedicated, access channel. Hence, an apparatus coupled to a network entity may be operable to provide the first access channel to a plurality of mobile terminals as a broadcast channel, while the second access channel may be provided as a dedicated channel for the mobile terminal. In other words, the common first access channel may be present all the time to enable mobile terminals to initially access the network, while the dedicated second access channel may only be set up on a per mobile terminal basis when it is actually required. Nevertheless the first access channel may also be load dependent, i.e. dependent on how many users desire to enter the network.

The dedicated second access channel may only be available and/or accessible after having accessed and initially communicated with the (radio access) network over the first access channel. Hence, according to embodiments the mobile communication system or its radio access network may be operable or configured to provide the configurable second access channel only after the capability information has been exchanged over the predetermined first access channel. Likewise, a mobile terminal may be operable to access or use the second access channel only after having obtained the radio access configuration information via the first access channel. Before that the second access channel may even not be existent. This may allow for an efficient occupation of radio resources such that specific radio resources for network access are only used when required. For example, according to some embodiments, CRS could be turned off within the second access channel for UEs operating on CSI-RS and DM-RS to free resources and/or to save power during idle sub-frames, e.g. by completely switching off the transmitter.

According to embodiments the first access channel may serve for initial network access and for informing the network about the data communication capabilities of the mobile terminal which desires to enter the network. For example, the first access channel may allow procedures similar or corresponding to the cell search procedure described in the introductory portion of the present specification. Based on the mobile terminal's data communication capabilities the network may then individually configure the second access channel for the mobile terminal, which may serve for changing between certain RRC states, such as RRC idle mode (no connection) or RRC connected mode, for example. That is to say, a mobile terminal may be operable to maintain an established communication link with the radio access network, in particular perform transitions between different RRC states, only via the dedicated second access channel and not via the common first access channel. Using the example of the introduction, the second access channel may e.g. convey access information similar to a conventional Downlink Shared Channel (DL-SCH) or a PDSCH. However, according to embodiments, the access information conveyed via the second access channel does not have a fixed structure, like in conventional systems, but a fully configurable structure/format which may be configured according to the technical features supported by a particular mobile terminal wishing to enter the network and/or maintain an established communication. Hence, the apparatus may be operable or configured to provide the mobile communication system or its radio access network with information on a mobile terminal specific configuration of the second access channel to allow the mobile terminal to access the radio access network in accordance to its data communication capabilities. With this feature no radio resources are wasted for information which is actually not required by the mobile terminal.

To summarize, the first access channel is the only access channel that requires a priori knowledge, i.e. has a fixed/mandatory configuration, while the second access channel can be fully configurable, i.e. all parts can be variable / optional (and enable to remove the need to support legacy features). The first access channel only needs to convey just enough information about the second access channel to allow initial communication within the second access channel. Any further configuration and maintenance of the established link may take place within the second access channel itself. Especially any reconfiguration, including idle mode/connected mode switching and mobility, may be done within the second access channel itself without involving the first access channel. Only in case of persistent radio link failure, the mobile terminal may start over and fall back to initial network entry via the first access channel. Hence, after a mobile terminal has switched from the first access channel to the dedicated second access channel, a reception of the first access channel is not required any longer. Hence, a mobile terminal or its related module may be operable to switch off a reception of the first access channel after having established a connection to the radio access network via the second access channel. This may save resources and/or energy at the mobile terminal. Conversely, the first access channel can reduce transmission and reception to a predetermined minimum, e.g. can stop broadcasting system information, after the mobile terminal has switched to the second access channel.

The interaction between the first and the second access channel may be characterized by two main properties:
a) The first access channel (IAC) is not used after bootstrapping; especially it is not used / needed to maintain connectivity to the second access channel (RAC) after communication has been established with the RAC.
b) It is impossible for a mobile to access the second access channel (RAC) directly without initial configuration via the first access channel (IAC).

Hence, a mobile terminal according to embodiments may be operable to access or use the second access channel only after having obtained the configuration information via the first access channel and to switch off reception of the first access channel after having established a connection to the radio access network via the second access channel.

The first access channel need not be highly optimized for spectral efficiency as the second access channel, as it is not used after the mobile terminal switched from the first access channel to the second access channel. Instead, it can be optimized for simplicity and robustness. Nevertheless, the first access channel may scale with load, i.e. with the number of mobiles in the process of initially accessing the network, not to unnecessarily waste radio resources and energy that are better used for the second access channel. In other words, the amount of downlink and uplink resources used by the first access channel (IAC) is scaled with the frequency of mobile terminals (UEs) entering the network. For example, the IAC may transmit and receive in a predetermined basic maximum interval length T. This interval may then be decreased to T/2, T/4, T/8 etc., increasing the amount of resources available for the IAC by a factor of 2, 4, 8 etc. This enables the IAC to allow 2, 4, 8 etc. times more UEs to access per time interval. The first access channel may be time, frequency and/or code multiplexed with the second access channel within the same carrier, but may alternatively occupy a dedicated carrier, depending on what is supported by an actual RAT that employs the concept.

In embodiments a clean separation of functions between the fixed first access channel and the configurable second access channel allows tuning and optimization of each access channel for its specific purpose. For example, the first access channel (IAC) can be tuned for power efficiency during low/no activity, for example, by allowing idle base stations to turn off their transmitters most of the time, without the risk to compromise performance/reactivity under load/for ongoing communications and/or handover, because the latter uses a completely different control channel, which is part of the second access channel.

The first access channel (IAC) may be an enabler for a fully mobile or user centric radio access. Thereby, in a mobile centric radio access there is no notion of a cell anymore with its common signaling and data channel, only mobile or user specific channels exist. However, without a common signaling channel, it is impossible to configure such mobile specific channels, therefore the need for an IAC. A side effect of mobile centric radio access in respect to legacy support is that features are enabled on a per mobile basis, removing the need for mobiles to support legacy features at all (except for what is necessary to access the current generation of deployed radio access channels). This allows the introduction of new features/changes without concerning too much about backward compatibility as well as without concerning about possible future evolvements of a RAT.

Further exemplary embodiments are subject-matter of the dependent claims and/or the following detailed description of some exemplary embodiments.

### Brief description of the Figures

Some embodiments of apparatuses and/or methods will be described in the following by way of example only, and with reference to the accompanying figures, in which
- Fig. 1: illustrates a schematic flow chart of a conventional network access procedure for entering a mobile communication network;
- Fig. 2: illustrates an exemplary schematic message sequence chart of a network access procedure between a mobile terminal and a radio access network, The network access procedure using a predefined first access channel and a configurable second access channel, according an embodiment; and
- Fig. 3: illustrates an example configuration for a first access channel.

### Detailed Description

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the disclosure. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

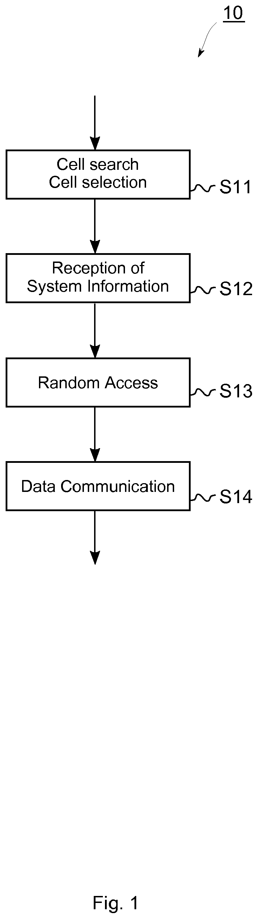

Turning now to the schematic flow chart of Fig.1, a conventional network access procedure 10 for accessing a mobile communication network will be explained more detail.

After power-on a mobile terminal, or UE according to 3GPP terminology, usually accesses a mobile communication network, in particular a RAN part thereof. For that purpose it needs to perform frequency, time and frame synchronization with one or more RANs before it can decode system information messages and select a preferred network, which the mobile terminal may then access via a so-called random access procedure. After having performed said random access to the network the mobile terminal may then perform a Radio Resource Control (RRC) connection setup.

A conventional mobile terminal wishing to access a conventional Long Term Evolution (LTE) system, for example, initially performs a conventional cell search procedure, S11, which includes a series of synchronization stages by which the mobile terminal may determine time and frequency parameters that are necessary to demodulate downlink signals, to transmit with correct timing and to acquire some critical system parameters. For the cell search (S11), the mobile terminal may use two special signals broadcast on each cell: the Primary Synchronization Signal (PSS) and the Secondary Synchronization Signal (SSS). Detection of these signals allows the mobile terminal to acquire the Physical Cell Id (PCI), time slot and frame synchronization, which will enable the mobile terminal to receive and read system information blocks from the network in a further conventional radio access act S12.

Act S12 comprises receiving a Master Information Block (MIB) carried by the Physical Broadcast Channel (PBCH). The MIB comprises a limited number of the most frequently transmitted parameters essential for initial access to a cell. The PBCH carries part of the logical Broadcast Control Channel (BCCH) and is designed for early detection by the mobile terminal and cell-wide coverage. Having obtained the information of the MIB the mobile terminal is able to receive further BCCH information parts via the Downlink Shared Channel (DL-SCH) which is used to transport downlink user data or Radio Resource Control (RRC) messages, as well as system information which are not transported via the PBCH. Those further BCCH information parts include common Access Stratum (AS) configuration including UL-SCH (Uplink Shared Channel) and RACH (Random Access Channel) configuration, and common Non-Access Stratum (NAS) configuration like Public Land Mobile Network (PLMN) IDs, access barring etc. Thereby the Access Stratum (AS) is a functional layer in LTE wireless telecom protocol stacks between radio network and UE. The access stratum is responsible for transporting data over the wireless connection and managing radio resources. The radio network is also called access network. In contrast, Non-access stratum (NAS) is a functional layer in LTE wireless telecom protocol stacks between the core network and UE. This layer is used to manage the establishment of communication sessions and for maintaining continuous communications with the UE as it moves. The NAS is defined in contrast to the AS which is responsible for carrying information over the wireless portion of the network.

The radio access act S12 is an enabler for the mobile terminal to perform a subsequent uplink random access procedure S13 to establish bidirectional communication with the network. When mobile terminal sends a first message of the random access procedure S13 to the network, it basically sends a specific pattern or signature which is called RACH preamble. The RACH preamble values differentiate requests coming from different mobile terminals. But if two mobile terminals use the same RACH preambles at same time then there can be a collision. In LTE there may totally be 64 such patterns or signatures available to the mobile terminal for the very first message of the random access procedure S13 and the mobile terminal will decide any one of them randomly for a contention-based random access procedure. For a non-contention based random access procedure actually the network will inform the mobile terminal about which one to use. Also, the mobile terminal also needs to provide its own identity to the network so that the network can address it in a next act. The identity that will be used to address the mobile terminal is called RA-RNTI (Random Access Radio Network Temporary Identifier). Basically it is not some value sent by the mobile terminal but the RA-RNTI is determined from the time slot number in which the preamble is sent. If the mobile terminal does not receive any response from the network, it increases its power in fixed step and sends a RACH preamble again

In response to the RACH preamble the network will answer with a "Random Access Response" on DL-SCH (Downlink Shared Channel) addressed to RA-RNTI. The response carries the mobile terminal's temporary C-RNTI, a Timing Advance Value with which the network informs the mobile terminal to change its timing so it can compensate for the round trip delay caused by the mobile terminal's distance from the eNodeB, and an Uplink Grant Resource with which the network (i.e. eNodeB) assigns an initial resource to the mobile terminal so that it can use the UL-SCH (Uplink Shared Channel).

Using the UL-SCH, the mobile terminal sends "RRC connection request message" to the network (eNodeB), wherein the mobile terminal is identified by the temporary C-RNTI (assigned previously by eNodeB). The mobile terminal's message contains a UE identity, e.g. a Temporary Mobile Subscriber Identity (TMSI) or a random value. The TMSI is used if the mobile terminal has previously connected to the same network. With the TMSI the mobile terminal is identified in the core network. A random value is used if the mobile terminal is connecting for the very first time to the network. The random value or TMSI is needed because there is possibility that the temporary C-RNTI has been assigned to more than one mobile terminal in a previous act, due to multiple requests coming at same time (RACH collision scenario).

Further during process S13, the network responds with a contention resolution message to the mobile terminal, whose "RRC connection request message" was successfully received previously. This message is conveyed to the mobile terminal via a Downlink Common Control Channel (DL-CCCH) transmitted within the PDSCH, where it is addressed towards the temporary C-RNTI. A contention resolution message echoes back the TMSI value or the random number (from previous steps). The one mobile station that finds its own TMSI or random number in this message promotes the temporary C-RNTI to its new C-RNTI which will be used for the further communication.

Using the new C-RNTI and DL-CCCH, the network conventionally sends a RRCConnectionSetup message to the mobile terminal. The RRCConnectionSetup message is used to establish Signaling Radio Bearer 1 (SRB1). It contains configuration information for SRB1. This allows subsequent signaling to use the conventional Dedicated Control Channel (DCCH) logical channel. The configuration for SRB1 can be a specific configuration or the default configuration.

In response to the RRC Connection Setup message from the network, the UE sends a conventional RRCConnectionSetupComplete message including information on the selected PLMN, Mobility Management Entity (MME), NAS message, etc.

This is followed by further conventional AS and NAS configuration (including security activation and data radio bearer setup) over DCCH using the C-RNTI. Furthermore, the network may request the UE to report its capabilities and may accordingly activate non-mandatory features of LTE, i.e. optional features as well as features introduced later with LTE Release 9 and beyond. After that, a data communication between the network and the mobile terminal can take place. Conventionally the mobile terminal continues to listen to PSS and/or SSS to stay synchronized in downlink, to the BCCH and DCCH (for changes in configuration), and uses RACH to reestablish uplink synchronization and request uplink grants in case the uplink has been idle for some time.

A disadvantage of the exemplary conventional radio access scheme 10 described with reference to Fig. 1 is that the radio network access configuration or the information exchanged during the procedure is independent on data communication capabilities of the mobile terminal and that the same radio access network configuration is later used to maintain and reconfigure the radio access, thereby rendering that configuration respectively the available configuration options predetermined. For example, in 3GPP's Long Term Evolution (LTE) Release 8, CRS have been defined to be always present in non-MBSFN sub-frames (MBSFN = Multimedia Broadcast/Multicast Services over a Single Frequency Network). Although according to LTE Release 10 UEs can solely use CSI-RS and DM-RS instead for channel estimation and data transmissions, respectively, those LTE Release 8 specific CRS cannot be turned off within the PDSCH, because they are necessary for radio access scheme 10 even for Release 10 UEs. If CRS could be turned off, e.g. when only LTE Release 10 UEs are currently connected, to free resources and/or to save power during idle sub-frames by completely switching off the transmitter, no additional UE would be able to access the network anymore. For efficiency and complexity reasons it would hence be desirable for radio network access schemes to remove legacy features of a RAT for which improved replacements exist in a newer release of the RAT.

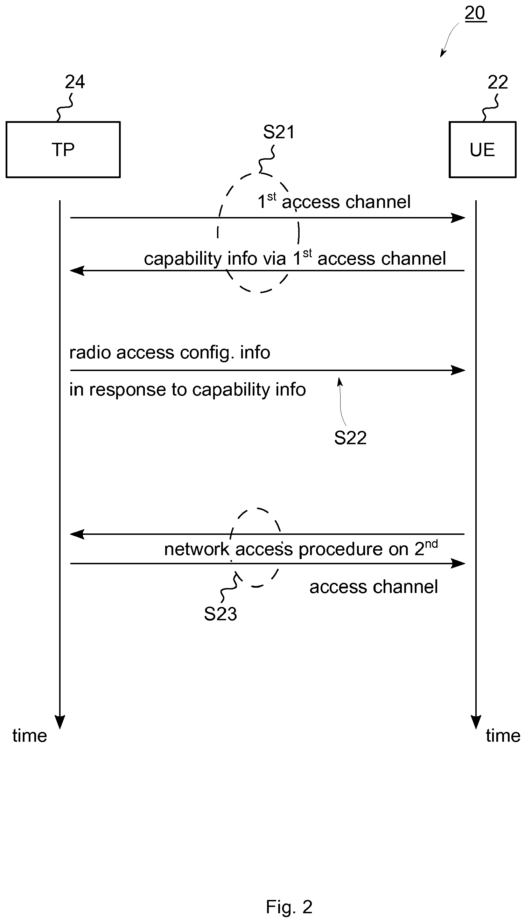

For this purpose embodiments suggest an improved concept for providing configurable radio access procedure tailored to the technical capabilities of the mobile terminal. Referring now to Fig. 2, it is illustrated an exemplary method 20 for providing a mobile terminal 22 with configurable radio access information.

The method 20 comprises an optional act S21 of providing, via a first access channel having a predetermined channel configuration independent of mobile terminal capabilities, i.e. a predetermined channel configuration supported by all mobile terminals, a network entity 24, e.g. a Transmission Point (TP), with capability information on data communication capabilities of the mobile terminal 22. Further, the method 20 comprises an act S22 of providing, via the first access channel, the mobile terminal 22 with radio access configuration information comprising system information to enable the mobile terminal 22 to access a radio access network via a second access channel which is configurable in accordance with the mobile terminal's data communication capabilities. In a further optional act S23 of the method 20 an actual network access of the mobile terminal 22 may be performed using the second access channel which has been configured for the mobile terminal in accordance with its data communication capabilities.

Seen from the perspective of the network entity 24, which may be a transmission point or a base station of the mobile communication network, for example, the method 20 may comprise an optional act S21 of receiving, via the first access channel and from the mobile terminal 22, capability information on the mobile terminal's data communication capabilities. Further, the method 20 comprises an act S22 of transmitting, via the first access channel, radio access configuration information to the mobile terminal 22, wherein the radio access configuration information comprises system information to enable the mobile terminal 22 to access the radio access network via the configurable second access channel. Thereby the radio access network may be operable to provide the configurable second access channel in act S23 only after acts S21 and/or S22 in which the capability information and/or the radio access configuration information has been exchanged over the predetermined first access channel. For this purpose the network entity 24 may be operable to provide the access network with information on an adequate mobile terminal specific configuration of the second access channel to allow the mobile terminal 22 to access the access network in accordance to its data communication capabilities.

Seen from the perspective of the mobile terminal 22, the method 20 comprises an optional act S21 of transmitting, via the first access channel and to the network entity 24, capability information on the mobile terminal's data communication capabilities. Further, the method 20 comprises an act S22 of receiving, via the first access channel, radio access configuration information from the network entity 24, wherein the configuration information comprises system information to enable the mobile terminal 22 to access the network via the configurable second access channel in act S23. Thereby the content and/or the format of second access channel is dedicatedly configured according to the mobile terminal's data communication capabilities. In other words, the mobile terminal 22 may be operable to access or use the configurable second access channel in act S23 according to its data communication capabilities optionally provided during act S21 and based on the radio access configuration information obtained via the predetermined first access channel in act S22. Thereby the mobile terminal 22 may be operable to access the second access channel in act S23 only after having obtained the radio access configuration information via the first access channel in act S22. In other embodiments the mobile terminal may also choose among different offered second access channels to choose the one which is best fitting its data communication capabilities. In some embodiments the mobile terminal 22 may be operable to switch off a reception of the first access channel after having established a connection via the second access channel.

The skilled person will understand that the first and/or the second access channel may comprise one or more logical channels and/or one or more physical channels for carrying the logical channels between the network and the mobile terminal. One difference between conventional access channels and embodiments is that no parts of the second access channel are fixed or mandatory, as this allows omitting a common or mandatory signaling channel, thereby enabling mobile centric radio access. Embodiments may also remove the need to inherit legacy features of former releases of a second access channel for backward compatibility, as its features can be configured on a per mobile basis without impacting other mobiles' radio access configuration. An interaction between first and the second access channel may be characterized in that the first access channel is not used after bootstrapping. In particular, it is not used or needed to maintain connectivity to the second access channel after communication has been established with the second access channel. Further, it is impossible for a mobile terminal to access the second access channel directly without initial configuration via the first access channel. Hence, the network or a network entity thereof may be operable to provide the configurable second access channel only after the capability information has been exchanged over the predetermined first access channel

The first access channel is the only channel that requires a priori knowledge at power-on of the mobile terminal, i.e. has a fixed or mandatory configuration, while the second access channel can be fully configurable, i.e., all parts can be variable or optional. That is to say, the second access channel is not yet predetermined at when the mobile terminal starts to use the first access channel. The first access channel only needs to convey just enough information about the second access channel to allow initial communication within the second access channel. A network entity may be operable to provide the network with information on an adequate mobile terminal specific configuration of the second access channel to allow the mobile terminal to access the radio access network via the second access channel in accordance to its data communication capabilities. Any further configuration and maintenance of the established link take place within the second access channel itself. Especially any reconfiguration, including idle mode/connected mode switching and mobility, may be done within the second access channel itself without involving the first access channel. Hence, a network entity and/or the mobile terminal may be operable or configured to maintain an established communication link with the radio access network, in particular perform transitions between different RRC states, only via the second access channel. In some embodiments a mobile terminal may hence be operable to switch off a reception of the first access channel after having established a connection to the radio access network via the second access channel. Only in case of persistent radio link failure, the mobile should start over and fall back to initial network entry via the first access channel (IAC).

According to an exemplary embodiment, the conventional access procedure 10, and in particular act S13 thereof, which has been explained above with respect to Fig. 1, could be modified such that in response to a mobile terminal's RRCConnectionRequest message on UL-CCCH (which may be an uplink part of the first access channel) a network entity could answer with a modified RRCConnectionSetup message (RRCConnectionSetupAS) on DL-CCCH (which may be a downlink part of the first access channel), in which available Access Strata, i.e. available second access channel(s) and their configuration could be listed. Hence, in such en embodiment the mobile terminal may choose among various offered second access channels by considering its own data communication capabilities. For the first access channel (IAC) such information on an Access Stratum could have been sent in the BCCH as part of the first access channel. In an exemplary embodiment, the configuration of a secondary access channel may describe shared channels as in current LTE, i.e. similar DL-SCH, UL-SCH, RACH plus C-RNTI_{RAC} (C-RNTI for the second access channel) to use or may describe a fully mobile specific configuration of channels where the UE ID/C-RNTI is implicit, i.e. of a possible future 5^{th} Generation radio access channel.

In a RRCConnectionSetupASComplete message on UL-CCCH according to an embodiment, for example, the mobile terminal may inform the network about its selected second access channel(s) (RAC). Then the mobile terminal may switch from the first access channel(s) with fixed and non-mobile-dependent format to the selected individually configured access second channel(s) with mobile-dependent format and stop listening to the first access channel(s).

In one exemplary embodiment the mobile-dependent second access channel(s) may use the DL-CCCH over its mobile-dependent PDSCH and the C-RNTI_{RAC} to send the RRCConnectionSetup message to the mobile terminal for setting up radio bearers including signaling radio bearers, i.e., DCCH (Dedicated Control Channel), for configuring MAC (medium access control), semi-persistent scheduling and dedicated physical parameters according to the mobile terminal's data communication capabilities. For example, the DCCH or the Dedicated Traffic Channel (DTCH) of the second access channel may be individually configured according to the mobile terminal's data communication capabilities. That is to say, they may not contain any superfluous information, which the mobile terminal cannot use.

In response to the RRCConnectionSetup message the mobile terminal may use the second access channel to send the RRCConnectionSetupComplete message on UL-DCCH over its mobile-dependent Physical Uplink Shared Channel (PUSCH) with C-RNTI_{RAC} including information on the selected PLMN, MME, NAS message, etc.

This may be followed by further AS and NAS mobile data communication capability specific configuration (including security activation and data radio bearer setup) over the UL-/DL-DCCH on the second access channel using the C-RNTI_{RAC}. After that data communication between the communication network and the mobile terminal 22 can take place.

When the mobile terminal 22 switches from the fixed format first access channel(s) to a selected second access channel(s) with mobile data communication capability specific format, e.g. an LTE New Carrier Type (NCT), the mobile terminal may stop listening to the first access channel (IAC), except of particular parts of the first access channel, like synchronization signals that may be shared among the first and the second radio access channel. That is to say, the mobile terminal cannot use IAC BCCH, IAC RACH, and/or IAC DL/UL-CCCH anymore according to embodiments. Instead, it needs to use similar means within the second access channel (RAC) to achieve the same purposes, e.g., keep the downlink synchronized, reconfigure the second access channel, and/or maintain the uplink. For example, changing the second access channel's configuration may be done via a mobile specific RAC DL/UL-DCCH instead of utilizing a conventional BCCH.

A more flexible, alternative embodiment to the above described two message exchange RRCConnectionSetupAS and RRCConnectionSetupASComplete could be a multiple step configuration of the first access channel. In an (optional) first configuration act, network and mobile terminal may agree on configuration data, e.g. format/language, of the first access channel, in a second step they may exchange coarse radio access capabilities via the first access channel (see optional act S21), e.g. supported and preferred radio standards/releases and radio standard specific mobile feature classes/categories. Then a detailed, possibly mobile specific, second access channel configuration for the candidate second access channel(s) may be exchanged via the first access channel (see act S22).

An exemplary embodiment for implementing the preconfigured first access channel may be to use a LTE carrier as specified up to 3GPP Release 11. Hence, the network or a network entity thereof may be operable to provide the first access channel using a carrier signal of a Long Term Evolution (LTE) radio access network. The Radio Resource Configuration (RRC) signaling is already extensible, so that for each new second access channel (RAC) an appropriate extension can be defined and the mobile terminal specific configuration required for successful communication within second access channel's own control (and data) channels can be established. The so-called "New Carrier Type" (NCT) that is discussed in the context of 3GPP Release 12 may be such a configurable second access channel (RAC) in case the NCT cannot be used standalone/accessed directly. Since many LTE features are not required to implement the first access channel (ICA), a stripped down variant should be used. For example large parts of the RRC signaling, e.g. to setup radio bearers for user data transfer or to configure channel feedback, etc., can be removed. Transmission modes can be limited to e.g. two antennas and transmit diversity, for example.

Such an embodiment, however, would occupy exclusive spectrum, at least a minimum sized carrier bandwidth of 1.4 MHz, although most of the time, when no mobile enters the network, physical radio resources (time and/or frequency) are left empty. An exclusive carrier might also cause spectrum fragmentation. Second, the relatively short and fixed periodicity of parts of the broadcasted information via the first access channel, e.g. comprising the PBCH (Physical Broadcast Channel) every 10 ms, which transmits the MIB (Master Information Block), and the BCH (Broadcast Channel) within the PDSCH, which transmits SIB1 (System Information Block 1) with (re-)transmissions every 20 ms, as well as CRS require almost constant transmission, irrespective of the actual signaling load. Such short periodicity is required to support handover measurements and short handover interruption times, but is unnecessarily high for initial network entry.

According to some embodiments may be one first access channel per second access channel as well as multiple second access channels may share a common first access channel, e.g. to increase first access channel utilization and limit spectrum fragmentation. Also, a single second access channel may have more than one first access channel, i.e. there may be n first access channels for m second access channels. This might become necessary in case a standardized first access channel turns out to be limiting for future evolvement of a second access channel like supporting network entry for very high speed and/or very far away and/or very low SINR (Signal-to-Interference and Noise Ratio) mobiles. Hence, one first access channel may have associated therewith one or more second access channels. That is to say, the provided radio access configuration information may comprises system information to enable the mobile terminal to access a wireless communication network or radio access network in accordance to its data communication capabilities via a plurality of configurable second access channels.

In some embodiments the first access channel may even comprise information for accessing different wireless networks via respective different second access channels, which are configurable according to the mobile terminal's capabilities. That is to say, in some embodiments the first access channel may belong to first wireless network, while the second access channel may belong to a different second wireless network. Hence, a network entity may even be operable to provide, via the first access channel, radio access configuration comprising system information to enable the mobile terminal to access a second radio access network via the second access channel, wherein the second radio access network is different from a first radio access network providing the first access channel.

According to an embodiment the first and the second access channel may be integrated with each other, e.g., they may be time, frequency and/or possibly code multiplexed on the same carrier. That is to say, the network or a network entity thereof may be operable to multiplex the first access channel with the second access channel within a same carrier signal. Such a first access channel might use the very same basic building blocks as the second access channel that is associated with it to simplify implementation. For example, both access channels may use Zadoff-Chu sequences as CAZAC (Constant Amplitude Zero Autocorrelation) sequences for synchronization in downlink (synchronization signal) and uplink (random access preamble), but the base sequence and/or allowed cyclic shifts may be different and/or limited within the first access channel.

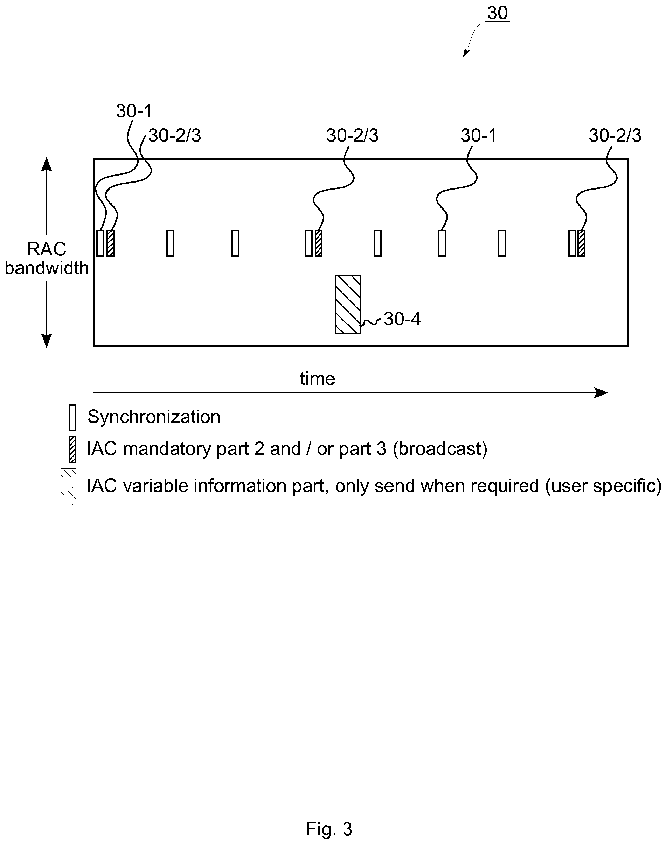

As is schematically illustrated in Fig. 3, a first access channel 30 (here radio resources of the first access (IAC) channel is integrated into radio resources of a second access channel (RAC)) may comprise mandatory and fixedly formatted/configured parts 30-1 and 30-2/3 with fixed minimum periodicity, i.e. fixed maximum period length T, that may comprise, as a first mandatory part 30-1, a synchronization signal, as a second mandatory part 30-2 information that identifies the first access channel 30 as such, and as a third mandatory part 30-3 information on how to initiate communication within the first access channel, i.e. where, when and how to transmit in uplink. That is to say, the access network and or a network entity 24 thereof may be operable to provide the mobile terminal 22, via the first access channel, with first information 30-1 for synchronizing the mobile terminal 22 to the (radio access) network providing the first access channel, and/or with second information 30-2 for identifying the first access channel at the mobile terminal 22, and/or with third information 30-3 for initiating a communication of the mobile terminal 22 with the network via the first access channel. Thereby at least parts of the first access channel 30 may be provided to a plurality of mobile terminals 22 as a broadcast channel, while the second access channel (not shown) is provided as a dedicated channel for a respective mobile terminal.

The parts 30-1 to 30-3 may not be distinct or may be shared with other channels. For example identification as first access channel (IAC) may be implicitly done by the way how the information in part 30-3 is coded. As another example, the synchronization part 30-1 may be shared among first access channel (IAC) and second access channel (RAC) or may even be shared among multiple first access channels and/or second access channels, forming a common synchronization signal used by a multitude of radio channels. Periodicity of each part may be higher than a minimum and may differ from part to part, but the minimum may be well-known and result in fixed (or set of fixed) time-frequency-code relations, as the mobile 22 starts to search according to that fixed relation. The first part 30-1 enables the mobile 22 to find and decode the second part 30-2, the second part 30-2 enables the mobile to distinguish the signal from other non-IAC signals and the third part 30-3 enables a mobile 22 to make itself visible, e.g. by sending a random access preamble.

The detection of a mobile 22 by the RAN (Radio Access Network) may then enable the transmission of further variable parts 30-4 of the first access channel, unless the further variable parts 30-4 are not already transmitted, e.g. because another mobile is already in the process of initial access. At least a first variable part 30-4 may have well-known fixed time-frequency-code relation to the fixed parts 30-1 to 30-3 or the third fixed 30-3 part may hold additional information on where to find at least a first variable part 30-4. The location of further variable parts can then be indicated within the first variable part.

The variable parts 30-4 of the first access channel may comprise information of types and/or identities of the RAN or RANs that the first access channel 30 belongs to and possibly information about alternative first access channels. Furthermore, they may hold a configuration necessary to setup a mobile specific communication within the first access channel Such information may resemble a fraction of what conventionally is sent by LTE's RRC within BCH, CCCH and DCCH (common and dedicated control channel). Via the mobile specific communication, RAN and mobile terminal 22 may exchange and negotiate further information like identities, capabilities and configuration that is required to decide whether the mobile terminal 22 is capable and allowed to access the RAN as well as configuration necessary to access and finally switch over to the second access channel.

Note that in case of integrated or multiplexed first access channel and second access channel, the first access channel may pose certain constraints on the configuration of the second access channel and vice versa. Besides the fact that first access channel resources and second access channel resources may be typically orthogonal within a time frequency code space, i.e., may occupy different physical resources, the waveform of first access channel and second access channel may be compatible as well. For example, in case of Orthogonal Frequency Division Multiplex (OFDM) as a waveform, first and second access channel either may share the same subcarrier spacing and/or symbol duration to maintain orthogonality or guard bands and/or guard times and/or filtering may be applied to eliminate interference and restore orthogonality in case that subcarrier spacing and symbol duration differ. The full potential of the first access channel concept may therefore only be exploited by a waveform that naturally supports full orthogonalization. A candidate for such a waveform is Block-Overlapping Multi-Carrier Modulation (BOMC), which integrates filtering over a time-frequency resource block, allowing the second access channel to evolve without being constrained by the first access channel.

Embodiments may be regarded as an enabler for fully mobile or user centric (beyond cellular) radio access. Also, embodiments may reduce performance and complexity impact of providing backward compatibility to older RAT releases and may mitigate the need to foresee future evolutions of the RAT.

Embodiments may further provide a computer program having a program code for performing the above method, when the computer program is executed on a computer or processor. A person of skill in the art would readily recognize that steps of various above-described methods may be performed by programmed computers. Herein, some embodiments are also intended to cover program storage devices, e.g., digital data storage media, which are machine or computer readable and encode machine-executable or computer-executable programs of instructions, wherein the instructions perform some or all of the acts of the above-described methods. The program storage devices may be, e.g., digital memories, magnetic storage media such as magnetic disks and magnetic tapes, hard drives, or optically readable digital data storage media. The embodiments are also intended to cover computers programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. It will thus be appreciated that those skilled in the art will be able to devise various arrangements that, although not explicitly described or shown herein, embody the principles of the disclosure and are included within its scope. Furthermore, all examples recited herein are principally intended expressly to be only for pedagogical purposes to aid the reader in understanding the principles of the disclosure and the concepts contributed by the inventor(s) to furthering the art, and are to be construed as being without limitation to such specifically recited examples and conditions.

Functional blocks shall be understood as blocks comprising circuitry that is configured to perform a certain function, respectively. Hence, a "means/apparatus for s.th." may as well be understood as a "means/apparatus configured to or suited for s.th.". A means/apparatus configured to perform a certain function does, hence, not imply that such means necessarily is performing the function (at a given time instant). In embodiments the term "apparatus" may relate to a network entity as well as to a mobile terminal.

Functions of various elements shown in the figures may be provided through the use of dedicated hardware as well as hardware capable of executing software in association with appropriate software. Moreover, any entity described herein as "means/apparatus", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

It is further to be noted that methods disclosed in the specification or in the claims may be implemented by a device having means for performing each of the respective acts of these methods.

Further, it is to be understood that the disclosure of multiple acts or functions disclosed in the specification or claims may not be construed as to be within the specific order. Therefore, the disclosure of multiple acts or functions will not limit these to a particular order unless such acts or functions are not interchangeable for technical reasons. Furthermore, in some embodiments a single act may include or may be broken into multiple sub acts. Such sub acts may be included and part of the disclosure of this single act unless explicitly excluded.

## Claims

1. Apparatus (24) for providing a mobile terminal (22) with radio access information, wherein the apparatus is
operable to provide, via a first access channel (30) having a predetermined format, the mobile terminal (22) with radio access configuration information comprising system information to enable the mobile terminal (22) to access a radio access network via a second access channel formatted in accordance with the mobile terminal's data communication capabilities,
wherein the radio access network is operable to provide a first terminal having first data communication capabilities with a second access channel formatted in accordance with the first data communication capabilities and to provide a second terminal having second, different data communication capabilities with a different second access channel formatted in accordance with the second data communication capabilities.

2. The apparatus (24) of claim 1, wherein the radio access network is operable to provide the second access channel only after capability information on the mobile terminal's data communication capabilities has been exchanged over the predetermined first access channel (30).

3. The apparatus (24) of claim 1, wherein the apparatus (24) is operable to provide at least the first access channel (30) using a carrier signal of a Long Term Evolution (LTE) radio access network.

4. The apparatus (24) of claim 1, wherein the apparatus (24) is operable to multiplex the first access channel (30) with the second access channel within a same carrier signal of the radio access network.

5. The apparatus (24) of claim 1, wherein the apparatus (24) is operable to provide the mobile terminal (22), via the first access channel (30), with first information (30-1) for synchronizing the mobile terminal (22) to a radio access network providing the first access channel (30), and/or with second information (30-1) for identifying the first access channel (30) at the mobile terminal (22), and/or with third information (30-3) for initiating a communication of the mobile terminal (22) with the radio access network via the first access channel (30).

6. The apparatus (24) of claim 5, wherein the communication between the mobile terminal (22) and the radio access network via the first access channel (30) provides additional information (30-4) for accessing the second access channel.

7. The apparatus (24) of claim 1, wherein the apparatus (24) is operable to provide at least a part of the first access channel (30) to a plurality of mobile terminals (22) as a broadcast channel, while the second access channel is provided as a dedicated channel for the mobile terminal.

8. The apparatus (24) of claim 1, wherein the apparatus (24) is operable to provide, via the first access channel (30), radio access configuration comprising system information to enable the mobile terminal (22) to access a second radio access network via the second access channel, wherein the second radio access network is different from a first radio access network providing the first access channel (30).

9. The apparatus (24) of claim 1, wherein the provided radio access configuration information comprises system information to enable the mobile terminal (22) to access one or more radio access networks in accordance to its data communication capabilities via a plurality of second access channels.

10. The apparatus (24) of claim 1, wherein the apparatus (24) is coupled to a mobile terminal (22) and is operable to access the second access channel of the radio access network according to the mobile terminal's data communication capabilities and based on the radio access configuration information obtained via the predetermined first access channel (30).

11. The apparatus (24) of claim 1, wherein the apparatus (24) is coupled to a mobile terminal (22) and is operable to access the second access channel only after having obtained the radio access configuration information via the first access channel (30).

12. The apparatus (24) of claim 1, wherein the apparatus (24) is coupled to a mobile terminal (22) and is operable to switch off a reception of the first access channel (30) after having established a connection to the radio access network via the second access channel.

13. The apparatus (24) of claim 1, wherein the apparatus (24) is coupled to a mobile terminal (22) and is operable to maintain an established communication link with the radio access network, in particular to perform transitions between different Radio Resource Control states, only via the second access channel.

14. Method (20) for providing a mobile terminal (22) with radio access information, the method comprising:
providing, via a first access channel (30) having a predetermined format, the mobile terminal (22) with radio access configuration information comprising system information to enable the mobile terminal (22) to access a radio access network via a second access channel formatted in accordance with the mobile terminal's data communication capabilities,
providing a first mobile terminal having first data communication capabilities with a second access channel formatted in accordance with the first data communication capabilities; and
providing a second mobile terminal having second, different data communication capabilities with a different second access channel formatted in accordance with the second data communication capabilities.

15. User equipment (22) having specific data communication capabilities, wherein the user equipment (22) is configured
to receive, via a first access channel (30) having a predetermined format, radio access configuration information comprising system information to enable the user equipment (22) to access a radio access network via a second access channel formatted in accordance with the user equipment's specific data communication capabilities; and
to access, based on the radio access configuration information received via the first access channel (30), the radio access network via the second access channel formatted in accordance with the user equipment's specific data communication capabilities.

16. The user equipment (22) of claim 15, further configured to transmit, via the first access channel (30), capability information on the user equipment's specific data communication capabilities to an apparatus (24).

17. A radio access network, comprising
a first user equipment having first data communication capabilities;
a second user equipment having second, different data communication capabilities; an apparatus (24) operable to transmit, via a first access channel (30) having a predetermined format, radio access configuration information comprising system information to enable the first and/or the second user equipment (22) to access the radio access network via a respective second access channel which is configurable in accordance with the user equipment's respective data communication capabilities, wherein the radio access network is operable to transmit a second access channel formatted in accordance with the first data communication capabilities to the first user equipment and to transmit a different access channel formatted in accordance with the second data communication capabilities to the second user equipment.

18. The radio access network of claim 17, wherein the first user equipment (22) is configured
to receive, via the first access channel (30), the radio access configuration information comprising the system information to enable the first user equipment (22) to access the radio access network via a second access channel formatted in accordance with the first user equipment's (22) first data communication capabilities; and
to access, based on the radio access configuration information received via the first access channel (30), the radio access network via the second access channel formatted in accordance with the first user equipment's (22) first data communication capabilities.

## Patentansprüche

1. Vorrichtung (24) zum Bereitstellen von Funkzugangsinformationen für ein mobiles Endgerät (22), wobei die Vorrichtung
betriebsfähig ist zum Bereitstellen, über einen ersten Zugangskanal (30) mit einem vorausbestimmten Format, von Funkzugangskonfigurationsinformationen für das mobile Endgerät (22), umfassend Systeminformationen, um dem mobilen Endgerät (22) den Zugang zu einem Funkzugangsnetz über einen zweiten Zugangskanal zu ermöglichen, der in Übereinstimmung mit den Datenkommunikationsfähigkeiten des mobilen Endgeräts formatiert ist,
wobei das Funkzugangsnetz betriebsfähig ist zum Bereitstellen, für ein erstes Endgerät mit ersten Datenkommunikationsfähigkeiten, eines zweiten Zugangskanals, der in Übereinstimmung mit den ersten Datenkommunikationsfähigkeiten formatiert ist, und zum Bereitstellen, für ein zweites Endgerät mit zweiten, unterschiedlichen Datenkommunikationsfähigkeiten, eines unterschiedlichen zweiten Zugangskanals, der in Übereinstimmung mit den zweiten Datenkommunikationsfähigkeiten formatiert ist.

2. Vorrichtung (24) nach Anspruch 1, wobei das Funkzugangsnetz betriebsfähig ist zum Bereitstellen des zweiten Zugangskanals nur nachdem Fähigkeitsinformationen über die Datenkommunikationsfähigkeiten des mobilen Endgeräts über den vorausbestimmten ersten Zugangskanal (30) ausgetauscht wurden.

3. Vorrichtung (24) nach Anspruch 1, wobei die Vorrichtung (24) betriebsfähig ist zum Bereitstellen mindestens des ersten Zugangskanals (30) unter Venrvendung eines Trägersignals eines Long Term Evolution (LTE)-Funkzugangsnetzes.

4. Vorrichtung (24) nach Anspruch 1, wobei die Vorrichtung (24) betriebsfähig ist zum Multiplexen des ersten Zugangskanals (30) mit dem zweiten Zugangskanal innerhalb eines gleichen Trägersignals des Funkzugangsnetzes.

5. Vorrichtung (24) nach Anspruch 1, wobei die Vorrichtung (24) betriebsfähig ist zum Bereitstellen, für das mobile Endgerät (22), über den ersten Zugangskanal (30), von ersten Informationen (30-1) zum Synchronisieren des mobilen Endgeräts (22) mit einem Funkzugangsnetz, das den ersten Zugangskanal (30) bereitstellt, und/oder von zweiten Informationen (30-2) zum Identifizieren des ersten Zugangskanals (30) an dem mobilen Endgerät (22), und/oder von dritten Informationen (30-3) zum Starten einer Kommunikation des mobilen Endgeräts (22) mit dem Funkzugangsnetz über den ersten Zugangskanal (30).

6. Vorrichtung (24) nach Anspruch 5, wobei die Kommunikation zwischen dem mobilen Endgerät (22) und dem Funkzugangsnetz über den ersten Zugangskanal (30) zusätzliche Informationen (30-4) für den Zugang zum zweiten Zugangskanal bereitstellt.

7. Vorrichtung (24) nach Anspruch 1, wobei die Vorrichtung (24) betriebsfähig ist, um mindestens einen Teil des ersten Zugangskanals (30) einer Vielzahl von mobilen Endgeräten (22) als Rundsendekanal bereitzustellen, während der zweite Zugangskanal als dedizierter Kanal für das mobile Endgerät bereitgestellt wird.

8. Vorrichtung (24) nach Anspruch 1, wobei die Vorrichtung (24) betriebsfähig ist zum Bereitstellen, über den ersten Zugangskanal (30), einer Funkzugangskonfiguration, umfassend Systeminformationen, um dem mobilen Endgerät (22) den Zugang zu einem zweiten Funkzugangsnetz über den zweiten Zugangskanal zu ermöglichen, wobei sich das zweite Funkzugangsnetz von einem ersten Funkzugangsnetz unterscheidet, das den ersten Zugangskanal (30) bereitstellt.

9. Vorrichtung (24) nach Anspruch 1, wobei die bereitgestellten Funkzugangskonfigurationsinformationen Systeminformationen umfassen, um dem mobilen Endgerät (22) den Zugang zu einem oder mehreren Funkzugangsnetzen in Übereinstimmung mit seinen Datenkommunikationsfähigkeiten über eine Vielzahl von zweiten Zugangskanälen zu ermöglichen.

10. Vorrichtung (24) nach Anspruch 1, wobei die Vorrichtung (24) an ein mobiles Endgerät (22) gekoppelt und betriebsfähig ist für den Zugang zum zweiten Zugangskanal des Funkzugangsnetzes gemäß den Datenkommunikationsfähigkeiten des mobilen Endgeräts und basierend auf den Funkzugangskonfigurationsinformationen, die über den vorausbestimmten ersten Zugangskanal (30) erhalten werden.

11. Vorrichtung (24) nach Anspruch 1, wobei die Vorrichtung (24) an ein mobiles Endgerät (22) gekoppelt und betriebsfähig ist für den Zugang zum zweiten Zugangskanal nur nachdem die Funkzugangskonfigurationsinformationen über den ersten Zugangskanal (30) erhalten wurden.

12. Vorrichtung (24) nach Anspruch 1, wobei die Vorrichtung (24) an ein mobiles Endgerät (22) gekoppelt und betriebsfähig ist zum Ausschalten eines Empfangs des ersten Zugangskanals (30), nachdem eine Verbindung zum Funkzugangsnetz über den zweiten Zugangskanal aufgebaut wurde.

13. Vorrichtung (24) nach Anspruch 1, wobei die Vorrichtung (24) an ein mobiles Endgerät (22) gekoppelt und betriebsfähig ist zum Aufrechterhalten einer aufgebauten Kommunikationsverbindung mit dem Funkzugangsnetz, insbesondere zum Durchführen von Übergängen zwischen unterschiedlichen Funkressourcensteuerungszuständen, nur über den zweiten Zugangskanal.

14. Verfahren (20) zum Bereitstellen von Funkzugangsinformationen für ein mobiles Endgerät (22), wobei das Verfahren Folgendes umfasst:
Bereitstellen, über einen ersten Zugangskanal (30) mit einem vorausbestimmten Format, von Funkzugangskonfigurationsinformationen für das mobile Endgerät (22), umfassend Systeminformationen, um dem mobilen Endgerät (22) den Zugang zu einem Funkzugangsnetz über einen zweiten Zugangskanal zu ermöglichen, der in Übereinstimmung mit den Datenkommunikationsfähigkeiten des mobilen Endgeräts formatiert ist,
Bereitstellen, für ein erstes mobiles Endgerät mit ersten Datenkommunikationsfähigkeiten, eines zweiten Zugangskanals, der in Übereinstimmung mit den ersten Datenkommunikationsfähigkeiten formatiert ist; und
Bereitstellen, für ein zweites mobiles Endgerät mit zweiten, unterschiedlichen Datenkommunikationsfähigkeiten, eines unterschiedlichen zweiten Zugangskanals, der in Übereinstimmung mit den zweiten Datenkommunikationsfähigkeiten formatiert ist.

15. Teilnehmergerät (22) mit spezifischen Datenkommunikationsfähigkeiten, wobei das Teilnehmergerät (22) ausgelegt ist
für den Empfang, über einen ersten Zugangskanal (30) mit einem vorausbestimmten Format, von Funkzugangskonfigurationsinformationen, umfassend Systeminformationen, um dem Teilnehmergerät (22) den Zugang zu einem Funkzugangsnetz über einen zweiten Zugangskanal zu ermöglichen, der in Übereinstimmung mit den spezifischen Datenkommunikationsfähigkeiten des Teilnehmergeräts formatiert ist; und
für den Zugang, basierend auf den Funkzugangskonfigurationsinformationen, die über den ersten Zugangskanal (30) empfangen werden, zum Funkzugangsnetz über den zweiten Zugangskanal, der in Übereinstimmung mit den spezifischen Datenkommunikationsfähigkeiten des Teilnehmergeräts formatiert ist.

16. Teilnehmergerät (22) nach Anspruch 15, weiterhin ausgelegt für die Übertragung, über den ersten Zugangskanal (30), von Fähigkeitsinformationen über die spezifischen Datenkommunikationsfähigkeiten des Teilnehmergeräts an eine Vorrichtung (24).

17. Funkzugangsnetz, umfassend:
ein erstes Teilnehmergerät mit ersten Datenkommunikationsfähigkeiten;
ein zweites Teilnehmergerät mit zweiten, unterschiedlichen Datenkommunikationsfähigkeiten;
eine Vorrichtung (24), die betriebsfähig ist zum Übertragen, über einen ersten Zugangskanal (30) mit einem vorausbestimmten Format, von Funkzugangskonfigurationsinformationen, umfassend Systeminformationen, um dem ersten und/oder dem zweiten Teilnehmergerät (22) den Zugang zum Funkzugangsnetz über einen jeweiligen zweiten Zugangskanal zu ermöglichen, der in Übereinstimmung mit den jeweiligen Datenkommunikationsfähigkeiten des Teilnehmergeräts konfigurierbar ist,
wobei das Funkzugangsnetz betriebsfähig ist zum Übertragen eines zweiten Zugangskanals, der in Übereinstimmung mit den ersten Datenkommunikationsfähigkeiten des ersten Teilnehmergeräts formatiert ist, und zum Übertragen eines unterschiedlichen Zugangskanals, der in Übereinstimmung mit den zweiten Datenkommunikationsfähigkeiten des zweiten Teilnehmergeräts formatiert ist.

18. Funkzugangsnetz nach Anspruch 17, wobei das erste Teilnehmergerät (22) ausgelegt ist
für den Empfang, über den ersten Zugangskanal (30), von Funkzugangskonfigurationsinformationen, umfassend Systeminformationen, um dem ersten Teilnehmergerät (22) den Zugang zum Funkzugangsnetz über einen zweiten Zugangskanal zu ermöglichen, der in Übereinstimmung mit den ersten Datenkommunikationsfähigkeiten des ersten Teilnehmergeräts (22) formatiert ist; und
für den Zugang, basierend auf den Funkzugangskonfigurationsinformationen, die über den ersten Zugangskanal (30) empfangen werden, zum Funkzugangsnetz über den zweiten Zugangskanal, der in Übereinstimmung mit den ersten Datenkommunikationsfähigkeiten des ersten Teilnehmergeräts (22) formatiert ist.

## Revendications

1. Appareil (24) pour fournir à un terminal mobile (22) des informations d'accès radio, l'appareil
permettant de fournir, par l'intermédiaire d'un premier canal d'accès (30) ayant un format prédéterminé, au terminal mobile (22) des informations de configuration d'accès radio comprenant des informations de système pour permettre au terminal mobile (22) d'accéder à un réseau d'accès radio par l'intermédiaire d'un deuxième canal d'accès formaté conformément aux capacités de communication de données du terminal mobile,
dans lequel le réseau d'accès radio permet de fournir à un premier terminal ayant des premières capacités de communication de données un deuxième canal d'accès formaté conformément aux premières capacités de communication de données et de fournir à un deuxième terminal ayant des deuxièmes capacités de communication de données différentes un deuxième canal d'accès différent formaté conformément aux deuxièmes capacités de communication de données.

2. Appareil (24) selon la revendication 1, dans lequel le réseau d'accès radio permet de fournir le deuxième canal d'accès uniquement après que des informations de capacité sur les capacités de communication de données du terminal mobile ont été échangées sur le premier canal d'accès (30) prédéterminé.

3. Appareil (24) selon la revendication 1, l'appareil (24) permettant de fournir au moins le premier canal d'accès (30) en utilisant un signal porteur d'un réseau d'accès radio d'évolution à long terme (LTE).

4. Appareil (24) selon la revendication 1, l'appareil (24) permettant de multiplexer le premier canal d'accès (30) avec le deuxième canal d'accès dans un même signal porteur du réseau d'accès radio.

5. Appareil (24) selon la revendication 1, l'appareil (24) permettant de fournir au terminal mobile (22), par l'intermédiaire du premier canal d'accès (30), des premières informations (30-1) pour synchroniser le terminal mobile (22) avec un réseau d'accès radio fournissant le premier canal d'accès (30), et/ou des deuxièmes informations (30-2) pour identifier le premier canal d'accès (30) au niveau du terminal mobile (22), et/ou des troisièmes informations (30-3) pour initier une communication du terminal mobile (22) avec le réseau d'accès radio par l'intermédiaire du premier canal d'accès (30).

6. Appareil (24) selon la revendication 5, dans lequel la communication entre le terminal mobile (22) et le réseau d'accès radio par l'intermédiaire du premier canal d'accès (30) fournit des informations supplémentaires (30-4) pour accéder au deuxième canal d'accès.

7. Appareil (24) selon la revendication 1, l'appareil (24) permettant de fournir au moins une partie du premier canal d'accès (30) à une pluralité de terminaux mobiles (22) en tant que canal de diffusion, alors que le deuxième canal d'accès est fourni en tant que canal dédié au terminal mobile.

8. Appareil (24) selon la revendication 1, l'appareil (24) permettant de fournir, par l'intermédiaire du premier canal d'accès (30), une configuration d'accès radio comprenant des informations de système pour permettre au terminal mobile (22) d'accéder à un deuxième réseau d'accès radio par l'intermédiaire du deuxième canal d'accès, dans lequel le deuxième réseau d'accès radio est différent d'un premier réseau d'accès radio fournissant le premier canal d'accès (30).

9. Appareil (24) selon la revendication 1, dans lequel les informations de configuration d'accès radio fournies comprennent des informations de système pour permettre au terminal mobile (22) d'accéder à un ou plusieurs réseaux d'accès radio conformément à ses capacités de communication de données par l'intermédiaire d'une pluralité de deuxièmes canaux d'accès.

10. Appareil (24) selon la revendication 1, l'appareil (24) étant couplé à un terminal mobile (22) et permettant d'accéder au deuxième canal d'accès du réseau d'accès radio conformément aux capacités de communication de données du terminal mobile et sur la base des informations de configuration d'accès radio obtenues par l'intermédiaire du premier canal d'accès prédéterminé (30).

11. Appareil (24) selon la revendication 1, l'appareil (24) étant couplé au terminal mobile (22) et permettant d'accéder au deuxième canal d'accès uniquement après avoir obtenu les informations de configuration d'accès radio par l'intermédiaire du premier canal d'accès (30).

12. Appareil (24) selon la revendication 1, l'appareil (24) étant couplé à un terminal mobile (22) et permettant de désactiver une réception du premier canal d'accès (30) après avoir établi une connexion avec le réseau d'accès radio par l'intermédiaire du deuxième canal d'accès.

13. Appareil (24) selon la revendication 1, dans lequel l'appareil (24) est couplé à un terminal mobile (22) et permet de maintenir une liaison de communication établie avec le réseau d'accès radio, en particulier pour effectuer des transitions entre différents états de commande de ressources radio, uniquement par l'intermédiaire du deuxième canal d'accès.

14. Procédé (20) pour fournir à un terminal mobile (22) des informations d'accès radio, le procédé
fournissant, par l'intermédiaire d'un premier canal d'accès (30) ayant un format prédéterminé, au terminal mobile (22) des informations de configuration d'accès radio comprenant des informations de système pour permettre au terminal mobile (22) d'accéder à un réseau d'accès radio par l'intermédiaire d'un deuxième canal d'accès formaté conformément aux capacités de communication de données du terminal mobile,
fournissant à un premier terminal mobile ayant des premières capacités de communication de données un deuxième canal d'accès formaté conformément aux premières capacités de communication de données ; et
fournissant à un deuxième terminal mobile ayant des deuxièmes capacités de communication de données différentes un deuxième canal d'accès différent formaté conformément aux deuxièmes capacités de communication de données.

15. Équipement utilisateur (22) ayant des capacités de communication de données spécifiques, l'équipement utilisateur (22) étant configuré
pour recevoir, par l'intermédiaire d'un premier canal d'accès (30) ayant un format prédéterminé, des informations de configuration d'accès radio comprenant des informations de système pour permettre à l'équipement utilisateur (22) d'accéder à un réseau d'accès radio par l'intermédiaire d'un deuxième canal d'accès formaté conformément aux capacités de communication de données spécifiques de l'équipement utilisateur ; et
pour accéder, sur la base des informations de configuration d'accès radio reçues par l'intermédiaire du premier canal d'accès (30), au réseau d'accès radio par l'intermédiaire du deuxième canal d'accès formaté conformément aux capacités de communication de données spécifiques de l'équipement utilisateur.

16. Équipement utilisateur (22) selon la revendication 15, configuré en outre pour transmettre, par l'intermédiaire du premier canal d'accès (30), des informations de capacité sur les capacités de communication de données spécifiques de l'équipement utilisateur à un appareil (24).

17. Réseau d'accès radio, comprenant
un premier équipement utilisateur ayant des premières capacités de communication de données ;
un deuxième équipement utilisateur ayant des deuxièmes capacités de communication de données différentes ;
un appareil (24) permettant de transmettre, par l'intermédiaire d'un premier canal d'accès (30) ayant un format prédéterminé, des informations de configuration d'accès radio comprenant des informations de système pour permettre au premier et/ou au deuxième équipement(s) utilisateur (22) d'accéder au réseau d'accès radio par l'intermédiaire d'un deuxième canal d'accès respectif qui peut être configuré conformément aux capacités de communication de données respectives de l'équipement utilisateur,
dans lequel le réseau d'accès radio permet de transmettre un deuxième canal d'accès formaté conformément aux premières capacités de communication de données au premier équipement utilisateur et de transmettre un canal d'accès différent formaté conformément aux deuxièmes capacités de communication de données au deuxième équipement utilisateur.

18. Réseau d'accès radio selon la revendication 17, dans lequel le premier équipement utilisateur (22) est configuré
pour recevoir, par l'intermédiaire du premier canal d'accès (30), les informations de configuration d'accès radio comprenant les informations de système pour permettre au premier équipement utilisateur (22) d'accéder au réseau d'accès radio par l'intermédiaire d'un deuxième canal d'accès formaté conformément aux premières capacités de communication de données du premier équipement utilisateur (22) ; et
pour accéder, sur la base des informations de configuration d'accès radio reçues par l'intermédiaire du premier canal d'accès (30), au réseau d'accès radio par l'intermédiaire du deuxième canal d'accès formaté conformément aux premières capacités de communication de données du premier équipement utilisateur (22).
